# EUROPÄISCHE PATENTSCHRIFT

(11) **EP 0 572 818 B1**
(45) Veröffentlichungstag und Bekanntmachung des Hinweises auf die Patenterteilung: **27.09.1995**
(21) Anmeldenummer: 93107510.5
(22) Anmeldetag: 08.05.1993
(51) Int. Cl.: B09B 3/00, E21B 43/38, E21B 43/40, E21B 43/08

(54) **Verfahren und Vorrichtung zum Ausspülen von im Erdreich vorhandenen Verunreinigungen**
Method and device for rinsing contaminants present in soil
Procédé et dispositif pour rincer des polluants présents dans le sol

(30) Priorität: 03.06.1992 DE 4218255
(43) Veröffentlichungstag der Anmeldung: 08.12.1993
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 418 570
- EP-A- 0 437 805
- EP-A- 0 457 261
- EP-A- 0 486 976
- DE-U- 8 804 344

## Beschreibung

Die Erfindung betrifft ein Verfahren und Vorrichtungen zum Ausspülen von Verunreinigungen aus dem oberhalb eines Grundwasserspiegels befindlichen Erdreich.

Es ist bereits bekannt, die Sanierung von verunreinigten Böden und verunreinigtem Grundwasser an Ort und Stelle durchzuführen, indem Brunnenschächte angelegt und mit Reinigungseinrichtungen versehen werden. In Bereichen mit einer starken Grundwasserströmung bereitet die Entfernung von Verunreinigungen besondere Schwierigkeiten, weil die Gefahr besteht, daß über die Brunnenschächte Verunreinigungen, die sich oberhalb eines Grundwasserspiegels befinden, tiefer in das Grundwasser gelangen und von dem Grundwasserfluß mitgeführt werden. In diesem Falle können Sanierungseinrichtungen einen Umweltschaden leicht noch vergrößern. Bei Verunreinigungen, die schwerflüchtig sind, beispielsweise Mineralölen, und nur durch Ausspülen aus dem Boden beseitigt werden können, sind die genannten Probleme in Bereichen mit starker Grundwasserströmung besonders schwierig zu lösen.

Der Erfindung liegt die Aufgabe zugrunde, hier ein zuverlässiges Ausspülverfahren und dazu passende Vorrichtungen zu schaffen, bei welchen die Gefahr einer Weiterleitung der Verunreinigung in den Grundwasserstrom vermieden wird.

Die gestellte Aufgabe wird erfindungsgemäß durch die in dem Hauptanspruch aufgeführten Verfahrensschritte gelöst.

Es ist zwar bekannt, in bis in den grundwassergesättigten Bodenbereich eingebrachten Brunnenbohrungen im Grundwasser einen über dem Brunnenschacht und über Reinigungsvorrichtungen führenden Grundwasserkreislauf auszubilden, um aus stehendem oder sich nur langsam bewegendem Grundwasser Verunreinigungen auszubringen. Abweichend davon wird aber gemäß der Erfindung ein Ausspülkreislauf in einem Bodenbereich geschaffen, der nicht mit Grundwasser gesättigt ist, und es wird dieser Kreislauf so geführt, daß er nicht bis in den mit strömendem Grundwasser gesättigten Bodenbereich führen muß. Dabei kann erfindungsgemäß entweder eine gesonderte Spülflüssigkeit oder als Spülflüssigkeit auch aus dem gesättigten Bodenbereich entnommenes Grundwasser verwendet werden, wobei auch bei dem Einsatz von Grundwasser als Spülflüssigkeit vermieden wird, daß hierbei Verunreinigungen aus dem ungesättigten Bodenbereich in das fließende Grundwasser gelangen können. Im zuletzt genannten Fall können insbesondere die im Patentanspruch 2 aufgeführten Verfahrensmerkmale von besonderem Vorteil sein.

Mit dem Verfahren gemäß der Erfindung wird in dem vom Grundwasser ungesättigten Bodenbereich ein sogenannter dynamischer Wasserberg geschaffen, in welchem Grundwasser oder eine besondere Spülflüssigkeit aus Brunnenschachtbereichen in das Erdreich ausströmt und in andere Brunnenschachtbereiche wieder zurückströmt. Zur Stützung dieses geschaffenen dynamischen Wasserberges und/oder zum gleichzeitigen Austreiben leichtflüchtiger Verunreinigungen aus der in Umlauf versetzten Flüssigkeit kann bei dem Verfahren gemäß der Erfindung der oberste Brunnenschachtbereich unter Unterdruck gesetzt werden. Beim Kreislaufbetrieb oberhalb des Grundwasserspiegels können zusätzlich waschaktive Substanzen in die Spülflüssigkeit eingegeben werden, was normalerweise wegen der Gefahr einer Grundwasserverseuchung unzulässig ist, bei dem Verfahren gemäß der Erfindung aber ohne die genannte Gefahr möglich ist. Es hat sich gezeigt, daß auch in Bereichen mit stärkerer Grundwasserströmung die den grundwassergesättigten Bereich nach oben abschließende Kapillarschicht, in welcher nur noch ein minimaler Grundwasserfluß feststellbar ist, eine Sicherheitsbarriere bildet, durch welche bei den zum Spülflüssigkeitskreislauf aufgebauten Druckdifferenzen die im Kreislauf umlaufende Spülflüssigkeit mit ihren eventuellen waschaktiven Zusätzen nicht in den Grundwasserstrom hindurchgelangt, so daß aus diesem Grund auch die Kapillarschicht des Bodenbereiches in die Reinigungszone miteinbezogen werden kann.

Das Verfahren gemäß der Erfindung kann mittels Vorrichtungen durchgeführt werden, die teilweise bereits zur Sanierung von Grundwasser eingesetzt werden, jedoch mit speziellen Zusatzmerkmalen versehen sind. Es ist bereits bekannt, zur Grundwassersanierung ein Brunnenrohr mit mindestens teilweise flüssigkeitsdurchlässiger Wandung und mit einem Brunnenrohreinsatz zu verwenden, der mindestens eine den Brunnenrohrraum in einzelne Bereiche unterteilende Trennwandung aufweist, die von einem eine Förderpumpe aufweisenden Rohr durchstoßen ist. Erfindungsgemäß kann der Brunnenrohreinsatz höhenverstellbar ausgebildet sein. Vorteilhafterweise kann auch der oberste Brunnenrohrbereich besonders gestaltet sein.

Bei einem höhenverstellbaren Brunnenrohreinsatz kann zweckmäßig das Rohr den tragenden Teil des Brunnenrohreinsatzes bilden, an welchem die mindestens eine Trennwandung und gegebenenfalls noch ein Abdichtungsteil befestigt sind, und das durch eine Öffnung in einem Brunnenrohrdeckel hindurch nach außen geführt und am Brunnenrohrdeckel axial verschiebbar und feststellbar gelagert ist.

Um eine Vorrichtung zur Durchführung des Verfahren gemäß der Erfindung besonders an unterschiedliche Verunreinigungen anpaßbar und betriebssicher auszubilden, kann erfindungsgemäß der oberste Brunnenrohrraum einen oberen Abschnitt mit einem größen Durchmesser aufweisen, wobei eine an der Durchmesserübergangsstelle vorgesehenen Verbindungs-Ringwandung mindestens zum größten Teil als flüssigkeitsdurchlässige Siebwandung ausgebildet sein kann, vorteilhafterweise eine in einer Ebene senkrecht zur Brunnenrohrachse verlaufende Siebwandung. Der vergrößerte oberste Brunnenrohrraum erleichtert die Unterbringung von Reinigungsteilen, insbesondere eine Anordnung von auswechselbaren Filtern. Durch die mindestens annähernd horizontalliegende flüssigkeitsdurchlässige Siebwandung, durch welche eine eingesetzte Reinigungsflüssigkeit, beispielsweise auch Grundwasser, zurück in den zu reinigenden Bodenbereich ausfließen kann, wird zunächst die hier erhöhte Gefahr einer Verokerung der Siebwandung sehr stark verringert. Außerdem lassen sich oberhalb der Siebwandung Filtermaterialien durch einfaches Aufschichten und auch leicht auswechselbar anordnen. Das eingesetzte Filtermaterial ist entsprechend den auszufilternden Verunreinigungen wählbar.
Der einen größeren Durchmesser aufweisende Abschnitt des obersten Brunnenrohrraumes kann zweckmäßig durch eine konzentrische Mittelwandung in einen äußeren und einen inneren Bereich unterteilt sein, wobei die Mittelwandung in ihrem der weitgehend horizontalen Siebringwandung benachbarten Teil flüssigkeitsundurchlässig und in einem von der Verbindungs-Ringwandung entfernten Teil flüssigkeitsdurchlässig ausgebildet ist. Bei dieser Ausbildung wird erreicht, daß in den inneren Bereich hochgeförderte Spülflüssigkeit erst in einem oberen Bereich in den äußeren Bereich des Brunnenrohrraumes ausfließen kann. Dort ist dadurch eine längere Filterstrecke ausgebildet, die zum Teil aus in Flüssigkeit aufschwimmenden Filterteilchen bestehen kann, die sich gut zur Adaption von schweren Ölphasen eignen. Solche aufschwimmenden Filterteilchen, insbesondere Kügelchen, lassen sich auswechseln und beispielsweise durch Abschleudern zur Wiederverwendung von den anhaftenden Verunreinigungen reinigen. Im inneren Bereich des durchmesservergrößerten Abschnittes des obersten Brunnenrohrraumes können ebenfalls Filter angeordnet werden, zweckmäßig aber eine Einrichtung zur Behandlung hochgeförderter Flüssigkeit mittels Gasen, wie sie von Anordnungen zur Reinigung von Grundwasser bereits bekannt ist.

Das eine Förderpumpe aufweisende und mindestens eine Trennwandung durchstoßende Rohr eines Brunnenrohreinsatzes kann aber auch durch den obersten Brunnenrohrbereich hindurch nach außen zu einer außerhalb des Brunnenrohres befindlichen Reinigungsvorrichtung geführt sein, von welcher aus eine Rückleitung in den obersten Brunnenrohrbereich führt und dort endet. Das mindestens eine Trennwandung durchstoßende Rohr kann auch mindestens in einem der Brunnenrohrbereiche einen gelochten Abschnitt aufweisen, der von einem auswechselbaren Filter umfangen sein kann.

Nachfolgend werden Ausführungsbeispiele einer Vorrichtung zur Durchführung des Verfahrens anhand der beiliegenden schematischen Zeichnungen näher erläutert.

Im einzelnen zeigen:
- Fig. 1: einen schematischen Längsschnitt durch ein erstes Ausführungsbeispiel mit einem Brunnenrohr und einem Brunnenrohreinsatz in seiner ersten Betriebsstellung;
- Fig. 2: eine der Fig. 1 entsprechende Schnittdarstellung mit dem Brunnenrohreinsatz in einer zweiten Betriebsstellung;
- Fig. 3: ein zweites Ausführungsbeispiel einer Vorrichtung zur Durchführung des Verfahrens mit einem einen größeren Durchmesser aufweisenden Abschnitt des obersten Brunnenrohrraumes mit einer Einrichtung zur Behandlung hochgeförderter Flüssigkeit mittels Gasen, in einer ersten möglichen Betriebsstellung des Brunnenrohreinsatzes;
- Fig. 4: eine der Fig. 3 entsprechende Schnittdarstellung durch das zweite Ausführungsbeispiel in einer zweiten möglichen Betriebsstellung seines Brunnenrohreinsatzes;
- Fig. 5: eine der Fig. 3 entsprechende Schnittdarstellung des zweiten Ausführungsbeispieles mit einer abweichenden Ausführungsform des Brunnenrohreinsatzes in einer dritten möglichen Betriebsstellung;
- Fig. 6: eine der Fig. 3 entsprechende Schnittdarstellung durch ein drittes Ausführungsbeispiel einer Vorrichtung zur Durchführung des Verfahrens.

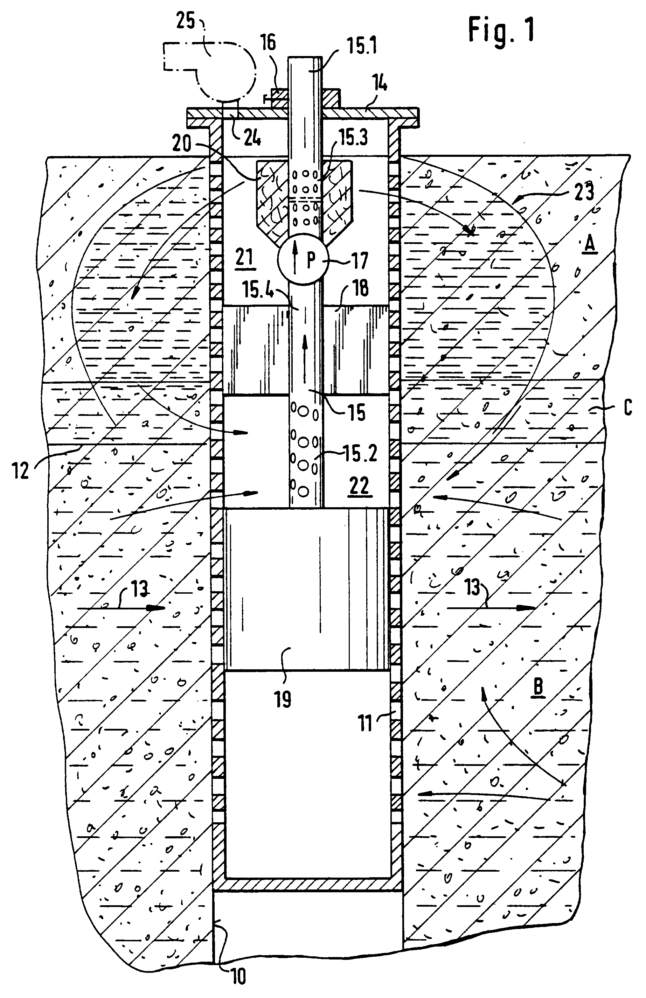

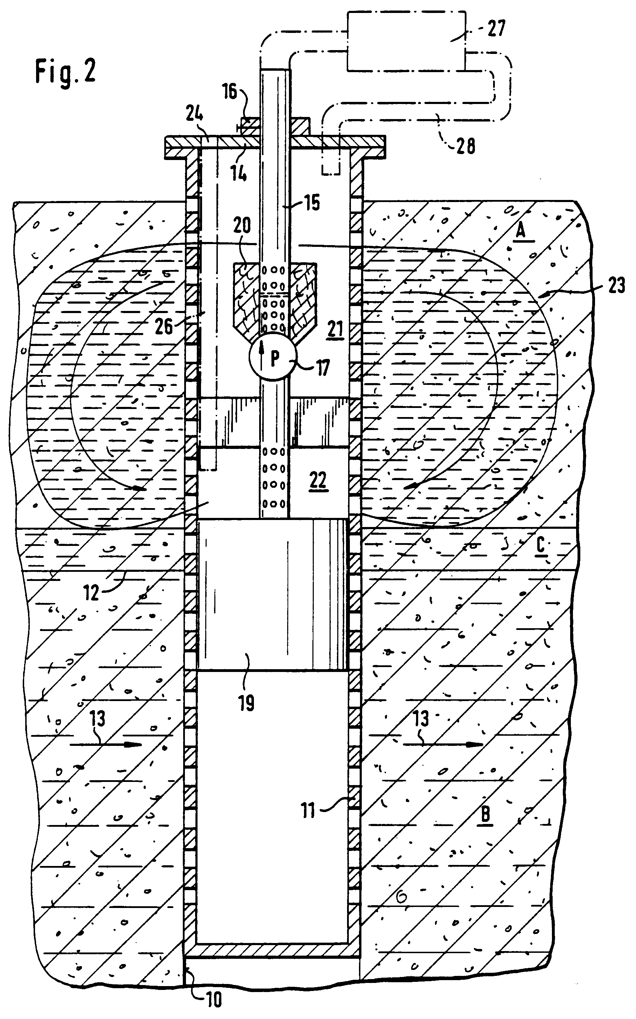

Die beiden Fig. 1 und 2 zeigen einen gebohrten Brunnenschacht 10, in welchen ein gelochtes Brunnenrohr 11 eingesetzt ist. Der Brunnenschacht 10 führt durch einen mit Grundwasser ungesättigten, verschmutzten oberen Bodenbereich A bis in den darunter befindlichen, mit Grundwasser gesättigten Bodenbereich B. Die in dem Bodenbereich B vorhandene Grundwasserströmung ist durch Pfeile 13 angedeutet. Der Grundwasserspiegel ist mit der Bezugsziffer 12 bezeichnet. Oberhalb des Grundwasserspiegels 12 befindet sich ein Kapillarbereich C, der grundwassergesättigt sein kann, in welchem jedoch kaum eine Grundwasserströmung vorhanden ist. Nach außen ist das Brunnenrohr 11 durch einen Deckel 14 verschlossen.

Innerhalb des gelochten Brunnenrohres 11 ist ein in Längsrichtung des Brunnenrohres 11 verstellbarer Brunnenrohreinsatz angeordnet. Dieser Brunnenrohreinsatz besteht aus einem zentralen Rohr 15, das mit seinem oberen Endbereich 15.1 durch eine zentrale Öffnung des Brunnenrohrdeckels 14 nach außen ragt und mittels eines Klemmringes 16 an dem Brunnenrohrdeckel 14 lösbar befestigt ist. Das Rohr 15 weist einen unteren gelochten Abschnitt 15.2, einen oberen gelochten Abschnitt 15.3 und einen dazwischenliegenden ungelochten Abschnitt 15.4 auf. Im ungelochten Abschnitt 15.4 ist eine Flüssigkeitsförderpumpe 17 angeordnet. Auf dem ungelochten mittleren Abschnitt 15.4 des Rohres 15 ist ein bis dicht gegen die Wandung des Brunnenrohres 11 reichender Trennwandungsteil 18 befestigt. Am unteren Ende des Rohres 15 ist außerdem ein relativ langer und ebenfalls bis dicht gegen die Wandung des Brunnenrohres 11 reichender Dichtungsteil 19 befestigt. Der obere gelochte Abschnitt 15.3 des Rohres 15 ist von einer auswechselbaren Filtermanschette 20 umgeben.

Durch den Trennwandungsteil 18 ist der Innenraum des Brunnenrohres 11 in einen oberen Brunnenrohrbereich 21 und in einen unteren Brunnenrohrbereich 22 unterteilt, wobei der untere Brunnenrohrbereich 22 nach unten durch den Dichtungsteil 19 begrenzt ist. Beide Brunnenrohrbereiche 21 und 22 weisen eine flüssigkeitsdurchlässige Wandung auf, während in dem dazwischenliegenden Bereich und in dem unterhalb anschließenden Bereich die Brunnenrohrwandung durch den Trennwandungsteil 18 und den Dichtungsteil 19 abgedichtet, also flüssigkeitsundurchlässig gehalten ist.

In Fig. 1 befindet sich der Brunnenrohreinsatz in einer abgesenkten Stellung, in welcher der Brunnenrohrbereich 22 bis unter den Grundwasserspiegel 12 reicht, also Grundwasser in diesen Brunnenrohrbereich 22 einströmen kann. Dieses Wasser wird mittels der Förderpumpe 17 durch das zentrale Rohr 15 nach oben gefördert und gelangt dort durch die Filtermanschette 20 hindurch in den Brunnenrohrbereich 21, aus welchem es nur nach außen durch die gelochte Wandung des Brunnenrohres 11 in den oberen und mit Grundwasser ungesättigten Bodenbereich A ausströmen kann. Hier wird mittels des hochgepumpten Grundwassers ein dynamischer Wasserberg 23 aufgebaut. Sobald dieser dynamische Wasserberg 23 mit ausreichender Größe aufgebaut ist, wird der Brunnenrohreinsatz an seinem zentralen Rohr 15 hochgezogen, so daß der ganze Brunnenrohrbereich 22 über den Grundwasserspiegel 12 gelangt. Beim dargestellten Ausführungsbeispiel endet der Brunnenrohrbereich 22 auch noch über der Kapillarzone C des Bodens. Jetzt kann nur noch Grundwasser aus dem geschaffenen dynamischen Wasserberg 23 in den unteren Brunnenrohrbereich 22 zurückströmen, das von der Förderpumpe 17 wieder nach oben gefördert wird, die mit Hilfe der Flüssigkeit des Wasserberges 23 einen Spülkreislauf im Bodenbereich A aufrecht erhält, mit welchem die in dem Bodenbereich A befindlichen Verunreinigungen ausgeflößt und in der auswechselbaren Filtermanschette 20 gesammelt werden.

Durch eine Öffnung 24 im Deckel 14 kann Wasser oder eine andere Spülflüssigkeit zum Ausgleich von Flüssigkeitsverlusten im geschaffenen Flüssigkeitskreislauf nachgeliefert werden. Auch können in den Flüssigkeitskreislauf in der Betriebsstellung des Brunnenrohreinsatzes nach Fig. 2 waschaktive Substanzen eingegeben werden. An der Öffnung 24 oder einer anderen Öffnung des Deckels 14 kann auch ein in Fig. 1 mit strichpunktierten Linien angedeuteter Ventilator 25 zur Erzeugung von Unterdruck im flüssigkeitsfreien oberen Brunnenrohrbereich angeschlossen werden.

Bei dem dargestellten ersten Ausführungsbeispiel wird der Spülkreislauf im Bodenbereich A mittels aus dem Bodenbereich B entnommenen Grundwassers betrieben. Der Spülkreislauf kann aber auch mittels fremder Spülflüssigkeit durchgeführt werden, wobei in der Betriebsstellung des Brunnenrohreinsatzes nach Fig. 2 über eine mit strichpunktierten Linien eingezeichnete Leitung 26 die Spülflüssigkeit in den Brunnenschachtbereich 22 eingegeben und von dort aus mittels der Förderpumpe 17 nach oben gefördert wird, wo die fremde Spülflüssigkeit in das umgebende Erdreich ausströmt und mit dieser fremden Spülflüssigkeit dort der dynamische Wasserberg 23 aufgebaut wird, innerhalb welchem der Spülvorgang abläuft und die ausgelösten Verunreinigungen über den Flüssigkeitskreislauf in die Filtermanschette 20 gelangen. Der Dichtungsteil 19 verhindert innerhalb des Brunnenrohres 11 ein Abfließen von Flüssigkeit aus dem Spülkreislauf in den mit fließendem Grundwasser gesättigten Bodenbereich B. Außerhalb des Brunnenrohres wird das Abfließen von Spülflüssigkeit durch die einen Flüssigkeitskreislauf aufrechterhaltende Förderpumpe 17 in Verbindung mit einer durch den Kapillarbereich C vorhandenen Abfluß-Sperrschicht verhindert.

Anstelle der Filtermanschette 20 kann auch eine außerhalb des Brunnenrohres angeordnete und in Fig. 2 mit strichpunktierten Linien angedeutete Reinigungsvorrichtung 27 vorgesehen werden, durch welche die Spülflüssigkeit mittels der Förderpumpe 17 hindurchgeleitet wird und aus welcher die Spülflüssigkeit über eine Rückleitung 28 in den oberen Brunnenrohrbereich 21 zurückgeleitet wird. Die Förderpumpe 17 kann auch in einem außerhalb des Brunnenrohres 11 befindlichen Abschnitt des Rohres 15 angeordnet sein.

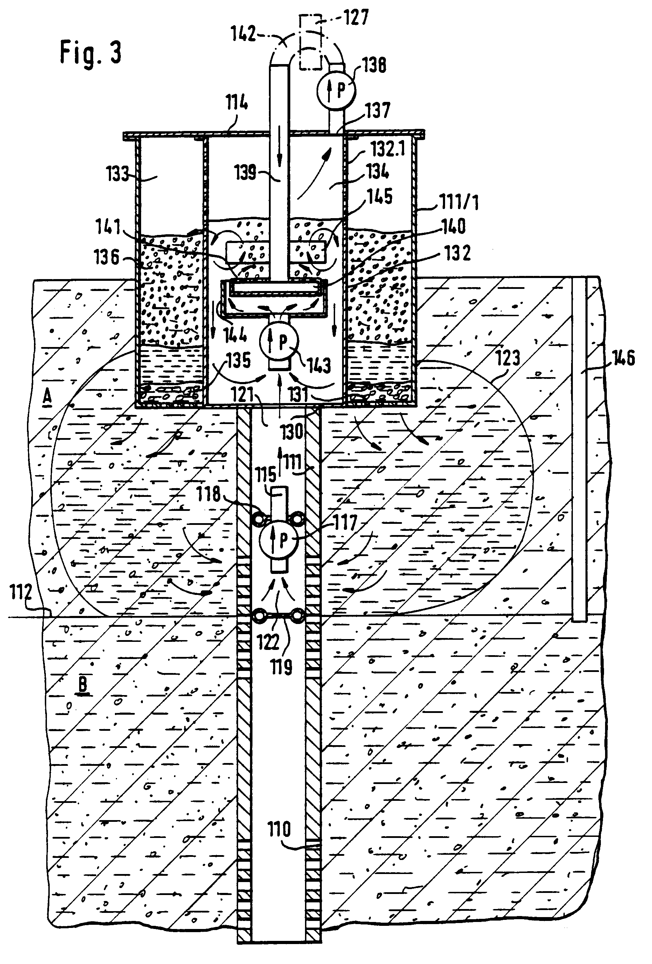

Bei dem Ausführungsbeispiel einer Vorrichtung, wie sie in den Fig. 3 - 5 dargestellt ist, sind mit der Vorrichtung nach den Fig. 1 und 2 vergleichbare Teile mit den gleichen Bezugsziffern, um die Zahl 100 erhöht, bezeichnet. Diese Vorrichtung unterscheidet sich zunächst dadurch von der Vorrichtung nach den Fig. 1 und 2, daß das Brunnenrohr 111 in seinem oberen Endbereich 111/1 sprungartig auf einen wesentlich größeren Durchmesser erweitert ist und in diesem erweiterten Bereich eine undurchlässige Außenwandung aufweist. Die sich an der Übergangsstelle zu dem oberen Endbereich 111/1 ergebende Verbindungsringwandung 130 ist zum größten Teil als in der dargestellten Einbaulage der Vorrichtung horizontale Siebwandung 131 ausgebildet, durch welche Flüssigkeit aus dem durchmesservergrößerten Brunnenrohrraum in den Bodenbereich A ausfließen kann. Der Endabschnitt 111/1 des Brunnenrohres 111 ist durch eine konzentrische Mittelwandung 132 in einen äußeren Bereich 133 und einen inneren Bereich 134 unterteilt. Die Mittelwandung 132 ist in ihrem von der Siebwandung 131 entfernten Teil 132.1 flüssigkeitsdurchlässig gestaltet, so daß in diesem oberen Bereich ein Flüssigkeitsübertritt aus dem inneren Bereich 134 in den äußeren Bereich 133 stattfinden kann. Der innere Bereich 134 kommuniziert mit einem anschließenden Brunnenrohrbereich 121, der durch eine Trennwandung 118 von einem nach unten anschließenden Brunnenrohrbereich 122 getrennt ist. Die Trennwandung 118 ist wie beim Ausführungsbeispiel nach den Fig. 1 und 2 durch ein Rohr 115 durchstoßen, in welchem eine Förderpumpe 117 angeordnet ist.

In dem äußeren Bereich 133 des durchmesservergrößerten Brunnenrohrabschnittes 111/1 ist oberhalb der Siebwandung 131 eine Schüttfilterschicht 135 angeordnet. Oberhalb davon ist eine zusätzliche Filterschicht 136 eingezeichnet, die aus in Flüssigkeit aufschwimmenden Filterteilchen, beispielsweise Kunststoffkugeln, besteht, an denen sich beispielsweise Öl als Ölfilm absetzen kann. Nach Abnahme des den Brunnenrohrabschnitt 111/1 verschließenden Deckels 114 lassen sich beide Filterschichten 136 und 135 zu Reinigungszwecken entnehmen. Durch den äußeren Bereich 133 kann in nicht dargestellter Weise von außen eine Leitung bis zur Siebwandung 131 geführt sein. Durch die Leitung können z. B. biologische Nährstoffe eingebracht werden, die in das verunreinigte Erdreich eingebracht werden sollen, um biologische Reinigungswirkungen zu unterstützen.

Im inneren Bereich 134 des obersten Brunnenrohrarmes ist eine bereits bekannte Einrichtung zur Unterdruckbildung und zur Entfernung von leichtflüchtigen Bestandteilen aus der hochgeförderten Flüssigkeit ausgebildet. Sie dient gleichzeitig zur Stützung des gebildeten dynamischen Wasserberges 123. Über einer Öffnung 137 im Deckel 114 ist ein Ventilator 138 angeordnet, der die Unterdruckbildung in dem inneren Bereich 134 bewirkt. Dabei wird über ein Rohr 139 von außen Luft oder ein anderes Gas in eine Kammer 140 nachgesaugt, die durch eine gelochte obere Wandung 141 dieser Kammer in Form von Gasblasen in die über der Kammer 140 befindliche Flüssigkeit austritt und bei ihrem Durchgang durch diese Flüssigkeit leichtflüchtige Stoffe mitnimmt. Bei der Verwendung eines besonderen Gases kann mittels des Ventilators 138 auch ein geschlossener Gaskreislauf betrieben werden, wobei der Ausgang des Ventilators 138 mit dem Eingang des Rohres 139 verbunden wird, wie durch eine mit strichpunktierten Linien eingezeichnete Rohrbrücke 142 angedeutet ist. Dabei wird in den Gasumlaufweg eine Reinigungsvorrichtung 127 zum Erfassen der mitgeführten leichtflüchtigen Verunreinigungen gelegt, die mit einer Dosiervorrichtung für Zusatzgase oder Nachschubgase gekoppelt sein kann.

Die in dem inneren Bereich 134 des obersten Brunnenrohrraumes befindliche Flüssigkeit wird mittels einer zusätzlichen Umwälzpumpe 143 in eine intensive Bewegung gebracht. Die Förderpumpe 143 fördert die mittels der Umwälzpumpe 117 von unten hochgebrachte Flüssigkeit in eine die Gaskammer 140 umgebende, nach oben offene Schale 144. Ein oberhalb der Luftkammer 140 angeordneter Leitring 145 begünstigt eine Zirkulationsbewegung der Flüssigkeit, die zum Teil entlang der Mittelwandung 132 nach unten zur Eingangsseite der Förderpumpe 143 zurückgeleitet und zum Teil durch den flüssigkeitsdurchlässigen Bereich 132.1 der Mittelwandung 132 in den äußeren Bereich 133 des obersten Brunnenraumes 111/1 ausfließt, durch die beiden Filterbereiche 136 und 135 hindurchfließt und durch die Siebwandung 131 nach außen in den erzeugten dynamischen Wasserberg 123 zurückgelangt. Dieser Kreislauf und eine horizontale Ausdehnung des Wasserberges 123 lassen sich insbesondere in dichteren Böden durch benachbarte Druckentlastungsbohrungen 146 begünstigen.

Bei der Betriebsstellung nach Fig. 3 ist die das Brunnenrohr nach unten abdichtende Trennwandung 119 auf die Höhe des Grundwasserspiegels 112 eingestellt, so daß alle Spülflüssigkeit aus dem gebildeten dynamischen Wasserberg 123 oberhalb des Grundwasserspiegels 112 wieder durch Öffnungen in der Wandung des Brunnenrohres 111 in den Brunnenrohrbereich 122 zurückströmt und von dort aus mittels der Förderpumpe 117 wieder nach oben gefördert wird.

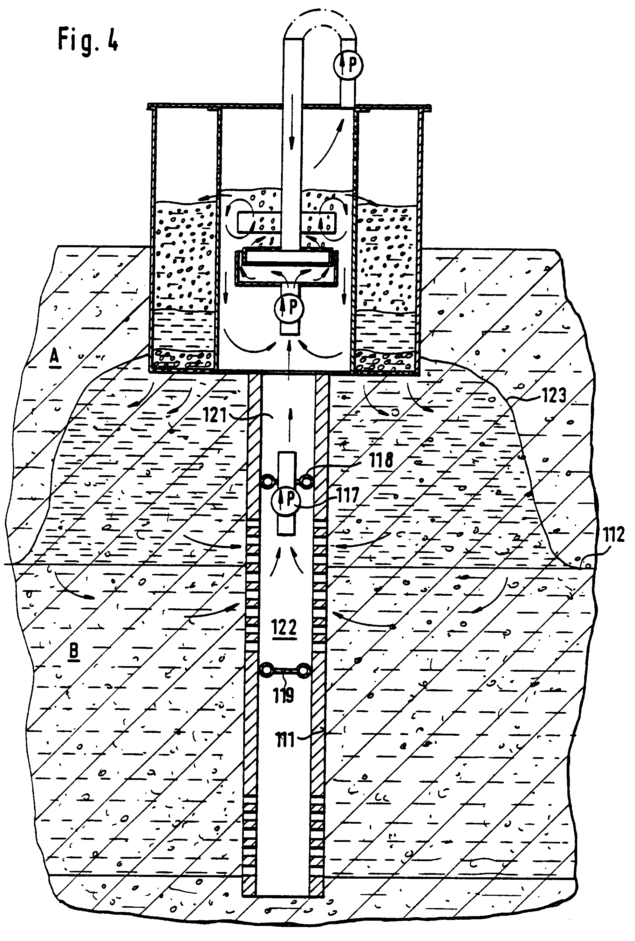

Bei der Betriebsstellung nach Fig. 4 ist die das Brunnenrohr 111 nach unten abdichtende Trennwandung 119 unter den Grundwasserspiegel 112 verlegt, so daß in den Brunnenrohrbereich 122 auch Grundwasser einströmen und mittels der Förderpumpe 117 in den erzeugten Flüssigkeitskreislauf, der im Bodenbereich A den dynamischen Grundwasserberg 123 bildet, einbezogen wird. Die Trennwandungen 118 und 119 können auch bei der gezeigten zweiten Ausführungsform der Vorrichtung mittels nicht dargestellter Verbindungsglieder von oben her verstellt werden.

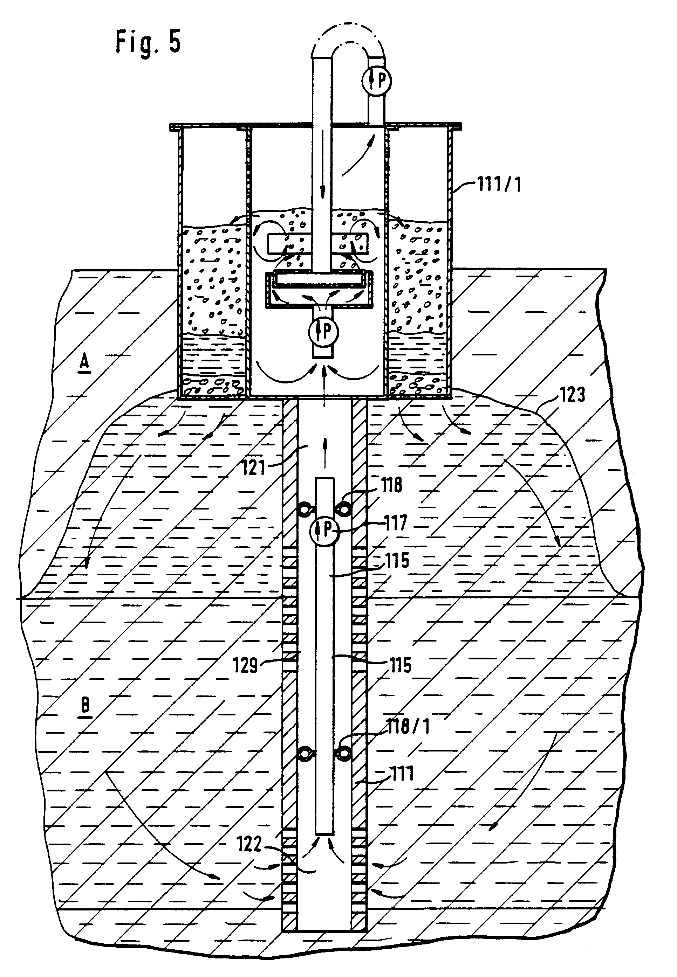

Bei der Betriebsstellung nach Fig. 5 ist in den Reinigungskreislauf von Flüssigkeit bewußt ein Teil des Grundwasserbereiches mit einbezogen. Der Brunnenrohrbereich 122 ist an das stirnseitig verschlossene untere Ende des Brunnenrohres 111 verlegt und nach oben durch eine Trennwandung 118/1 abgeschlossen. Das Rohr 115, in welchem die Förderpumpe 117 angeordnet ist, durchstößt sowohl die obere Trennwandung 118 als auch die untere Trennwandung 118/1 und überbrückt einen dazwischenliegenden Brunnenrohrbereich 129.

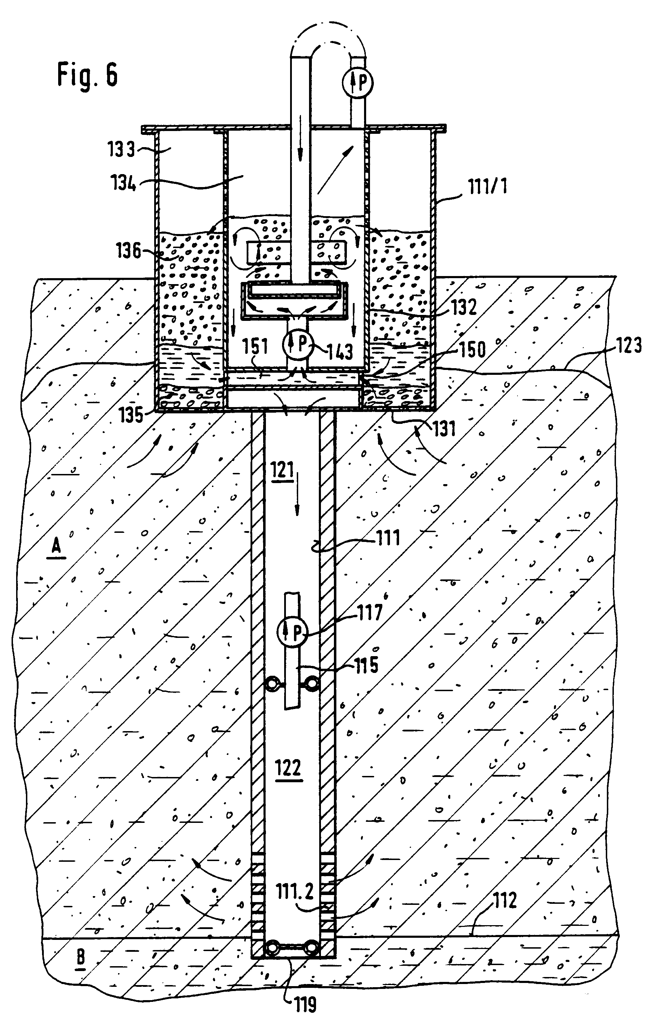

Die Vorrichtung kann gemäß dem in Fig. 6 dargestellten dritten Ausführungsbeispiel auch so aufgebaut sein, daß der Flüssigkeitskreislauf in umgekehrter Richtung erfolgt, so daß in dem gebildeten dynamischen Wasserberg 123 die Spülflüssigkeit im Bodenbereich A von unten nach oben fließt und im Brunnenrohr 111 mittels der Förderpumpe 117 aus dem Brunnenrohrbereich 121 nach unten in den Brunnenrohrbereich 122 gefördert wird. Dort tritt sie dann durch einen flüssigkeitsdurchlässigen Bereich 111.2 des Brunnenrohres 111 hier oberhalb des Grundwasserspiegels 112 wieder nach außen. Der obere Eintritt in den Brunnenrohrabschnitt 111/1 erfolgt über die Siebwandung 131. Der Brunnenrohreinsatz ist dahingehend abgewandelt, daß die Mittelwandung 132 in ihrem geschlossenwandigen unteren Bereich mindestens zwei Öffnungen 150 aufweist, von denen aus durch den inneren Bereich 134 des durchmesservergrößerten Brunnenrohrabschnittes 111/1 Rohre 151 zu der Ansaugseite der Förderpumpe 143 der Reinigungseinrichtung führen.

Unter der Saugwirkung der Förderpumpe 143 wird die Spülflüssigkeit durch die Siebringwandung 131 und die Filterschicht 135 hindurch in die Rohre 151 gezogen und von der Förderpumpe 143 in die darüber befindliche, bereits im Zusammenhang mit Fig. 3 beschriebene Reinigungsvorrichtung gefördert. Die im inneren Bereich 134 an der Mittelwandung 132 nach unten zurückströmende Spülflüssigkeit gelangt an den Rohren 151 vorbei in den Brunnenrohrbereich 121 und in den Wirkungsbereich der unteren Förderpumpe 117. Die aus dem inneren Bereich 134 in den äußeren Bereich 133 überströmende Spülflüssigkeit gelangt durch die Filterschicht 136 nach unten und damit erneut in den Saugbereich der oberen Förderpumpe 143. Es werden somit ein innerer und ein äußerer Flüssigkeitskreislauf erzeugt, die sich überschneiden.

## Patentansprüche

1. Verfahren zum Ausspülen von Verunreinigungen aus dem oberhalb des Grundwasserspiegels (12, 112) befindlichen Erdreich (A), gekennzeichnet durch folgende Verfahrensschritte:
a) Einbringen eines Brunnenschachtes (10) mindestens bis dicht über eine grundwassergesättigte Zone (B) und Auskleiden mit einem Brunnenrohr (11) mit mindestens bereichsweise flüssigkeitsdurchlässiger Wandung;
b) Schaffung von zwei durch einen abgedichteten Brunnenrohrabschnitt (18) voneinander getrennten flüssigkeitsdurchlässigen Brunnenrohrbereichen (21, 22) und überbrückung des abgedichteten Brunnenrohrabschnitts mittels eines Kanales (Rohr 15), in welchem eine Flüssigkeitsförderpumpe (17) angeordnet ist;
c) Anfüllen mindestens des unteren, eine flüssigkeitsdurchlässige Wandung aufweisenden Brunnenrohrbereiches (22) mit einer Spülflüssigkeit und Hochfördern der Spülflüssigkeit mittels der Förderpumpe (17) in den oberen, eine flüssigkeitsdurchlässige Wandung aufweisenden Brunnenrohrbereich (21) zur Ausbildung eines Spülflüssigkeitskreislaufes durch das Brunnenrohr (11) von unten nach oben und zurück durch das umgebende Erdreich (A) und die durchlässigen Wandungsbereiche, wobei in dem Kreislaufweg an passender Stelle eine Reinigungsvorrichtung (20) angeordnet ist.

2. Verfahren nach Anspruch 1, dadurch gekennzeichnet, daß der Brunnenschacht (10) bis in den grundwassergesättigten Bodenbereich (B) unter den Grundwasserspiegel (12) niedergebracht wird; daß das Rohr (15) mit der Förderpumpe (17) und Wandungsbereiche abdichtende Teile (18, 19) als höhenverstellbarer Brunnenrohreinsatz ausgebildet werden; daß als Spülflüssigkeit Grundwasser im Brunnenschacht (10) zur Bildung eines dynamischen Wasserberges (23) oberhalb des Grundwasserspiegels (12) im Erdreich hochgefördert wird; daß nach Ausbildung des Wasserberges (23) der Brunnenrohreinsatz zur Ausbildung des Spülkreislaufes im grundwasserungesättigten Bereich (A) und/oder im Kapillarbereich (C) höhergesetzt wird; und daß als Verlustersatz Spülflüssigkeit von außen dosiert in den Kreislauf nachgeliefert wird.

3. Verfahren nach Anspruch 1 oder 2, dadurch gekennzeichnet, daß der obere und flüssigkeitsfreie Brunnenschachtbereich unter Unterdruck gesetzt wird.

4. Verfahren nach einem der Ansprüche 1 bis 3, dadurch gekennzeichnet, daß beim Kreislaufbetrieb oberhalb des Grundwasserspiegels (12) zusätzlich waschaktive Substanzen in die Spülflüssigkeit eingegeben werden.

5. Vorrichtung zur Durchführung des Verfahrens nach einem der Ansprüche 1 bis 4, mit einem mindestens bereichsweise eine flüssigkeitsdurchlässige Wandung aufweisenden Brunnenrohr (11) und einem Brunnenrohreinsatz mit mindestens einem den Brunnenrohrraum in flüssigkeitsdurchlässige Wandungsbereiche aufweisende Einzelbereiche (21, 22) teilenden Trennwandungsteil (18), der von einem eine Förderpumpe (17) aufweisenden Rohr (15) durchstoßen ist, dadurch gekennzeichnet, daß der Brunnenrohreinsatz höhenverstellbar ausgebildet ist und an seinem unteren Ende einen Abdichtungsteil (19) aufweist, der ein Abfließen von Spülflüssigkeit im Brunnenrohr nach unten verhindert.

6. Vorrichtung nach Anspruch 5, dadurch gekennzeichnet, daß das Rohr (15) den tragenden Teil des Brunnenrohreinsatzes bildet, an welchem der Trennwandungsteil (18) und der Abdichtungsteil (19) befestigt sind, und daß das Rohr (15) durch eine Öffnung in einem Brunnenrohrdeckel (15) hindurch nach außen geführt und am Brunnenrohrdeckel (14) axial verschiebbar und feststellbar gelagert ist.

7. Vorrichtung zur Durchführung des Verfahrens nach einem der Ansprüche 1 bis 4, mit einem mindestens bereichsweise eine flüssigkeitsdurchlässige Wandung aufweisenden Brunnenrohr und einem Brunnenrohreinsatz mit mindestens einer den Brunnenrohrraum in flüssigkeitsdurchlässige Wandungsbereiche aufweisende Einzelbereiche (121, 122, 129) teilenden Trennwandung (118, 118/1), die von einem eine Förderpumpe (117) aufweisenden Rohr (115) durchstoßen ist, dadurch gekennzeichnet, daß der oberste Brunnenrohrabschnitt (111/1) einen größeren Durchmesser aufweist als das übrige Brunnenrohr (111) und daß eine an der Durchmesserübergangsstelle vorgesehene Verbindungs-Ringwandung (130) mindestens zum größten Teil als flüssigkeitsdurchlässige Siebwandung (131) ausgebildet ist.

8. Vorrichtung nach Anspruch 7, dadurch gekennzeichnet, daß die Verbindungs-Ringwandung (130/131) in einer Ebene senkrecht zur Achse des Brunnenrohres (111) verläuft.

9. Vorrichtung nach Anspruch 7 oder 8, dadurch gekennzeichnet, daß im obersten Brunnenrohrabschnitt (111/1) unmittelbar über der flüssigkeitsdurchlässigen Verbindungs-Ringwandung (131) Filtermaterial (135) angeordnet ist.

10. Vorrichtung nach einem der Ansprüche 7 bis 9, dadurch gekennzeichnet, daß der einen größeren Durchmesser aufweisende Brunnenrohrabschnitt (111/1) durch eine konzentrische Mittelwandung (132) in einen äußeren und einen inneren Bereich (133, 134) unterteilt ist und daß die Mittelwandung in ihren der Verbindungs-Ringwandung (130) benachbarten Teil flüssigkeitsundurchlässig und in einem von der Verbindungs-Ringwandung (130) entfernten Teil (132.1) flüssigkeitsdurchlässig ausgebildet ist.

11. Vorrichtung nach Anspruch 10, dadurch gekennzeichnet, daß im äußeren Bereich (133) des durchmessergrößeren Brunnenrohrabschnittes (111/1) eine aus in Flüssigkeit aufschwimmenden Filterteilchen bestehende Filterschicht (136) ausgebildet ist.

12. Vorrichtung nach einem der Ansprüche 7 bis 11, dadurch gekennzeichnet, daß im inneren Bereich (134) des durchmessergrößeren Brunnenrohrabschnittes (111/1) eine Einrichtung (139 - 141) zur Behandlung hochgeförderter Flüssigkeit mittels Gasen angeordnet ist.

13. Vorrichtung nach einem der Ansprüche 5 bis 12, dadurch gekennzeichnet, daß das eine Förderpumpe (17) aufweisende und mindestens eine Trennwandung (18) durchstoßende Rohr (15) durch den obersten Brunnenrohrbereich (21) hindurch nach außen zu einer außerhalb des Brunnenrohres (11) befindlichen Reinigungsvorrichtung (27) geführt ist, von welcher aus eine Rückleitung (28) in den obersten Brunnenrohrbereich (21) führt und dort endet.

14. Vorrichtung nach einem der Ansprüche 5 bis 12, dadurch gekennzeichnet, daß das mindestens eine Trennwandung (18) durchstoßende Rohr (15) mindestens in einem der Brunnenrohrbereiche (21, 22) einen gelochten Abschnitt aufweist, der von einem auswechselbaren Filter (20) umfangen ist.

## Claims

1. A process for flushing impurities from the soil (A) situated above the groundwater level (12, 112), characterised by the following process steps:
a) installing a well shaft (10) at least down to closely above a groundwater-saturated zone (B) and lining it with a well pipe (11) having a wall which is permeable to liquid at least regionally;
b) creating two liquid-permeable well pipe regions (21, 22) separated from each other by a sealed well pipe section (18) and bridging the sealed well pipe section by means of a duct (pipe 15) in which a liquid feed pump (17) is disposed;
c) filling at least the lower well pipe region (22), which has a liquid-permeable wall, with a flushing liquid and raising the flushing liquid by means of the feed pump (17) into the upper well pipe region (21), which has a liquid-permeable wall, in order to produce a circulation of flushing liquid through the well pipe (11) from bottom to top and back through the surrounding soil (A) and the permeable wall regions, wherein a purification device (20) is disposed at an appropriate point in the path of the circulation.

2. A process according to claim 1, characterised in that the well shaft (10) is sunk into the groundwater-saturated soil region (B) below the groundwater level (12); that the pipe (15) with the feed pump (17) and the parts (18, 19) sealing the wall regions are constructed as a height-adjustable well pipe insert; that groundwater is raised as the flushing liquid in the well shaft (10) in order to form a dynamic mass of water (23) above the groundwater level (12) in the soil; that after forming the mass of water (23) the well pipe insert is placed higher in the groundwater-unsaturated region (A) and/or in the capillary region (C) in order to form the flushing circuit; and that flushing liquid metered from the outside is subsequently supplied to the circuit as a replacement for losses.

3. A process according to claim 1 or 2, characterised in that the upper well shaft region which is free from liquid is placed under reduced pressure.

4. A process according to any one of claims 1 to 3, characterised in that in circulating operation above the groundwater level (12) additional washing-active substances are introduced into the flushing liquid.

5. An apparatus for carrying out the process according to any one of claims 1 to 4, with a well pipe (11) which at least regionally has a liquid-permeable wall and a well pipe insert with at least one partition wall part (18) which divides the well pipe space into individual regions (21, 22) having liquid-permeable wall regions, through which partition wall part a pipe (15) having a feed pump (17) passes, characterised in that the well pipe insert is of height-adjustable construction and has a sealing part (19) at its lower end which prevents flushing liquid in the well pipe from draining off downwards.

6. An apparatus according to claim 5, characterised in that the pipe (15) forms the supporting part of the well pipe insert to which the partition wall part (18) and the sealing part (19) are attached, and that the pipe (15) is led outwards through an opening in a well pipe cover (15) and is mounted on the well pipe cover (14) so that it is axially displaceable and fixable.

7. An apparatus for carrying out the process according to any one of claims 1 to 4, with a well pipe which at least regionally has a liquid-permeable wall and a well pipe insert with at least one partition wall (118, 118/1) which divides the well pipe space into individual regions (121, 122, 129) having liquid-permeable wall regions, through which partition wall a pipe (115) having a feed pump (117) passes, characterised in that the uppermost well pipe section (111/1) has a larger diameter than the remaining well pipe (111) and that a connecting annular wall (130) which is provided at the diameter transition point is constructed at least for the most part as a liquid-permeable screen wall (131).

8. An apparatus according to claim 7, characterised in that the connecting annular wall (130/131) extends in a plane perpendicular to the axis of the well pipe (111).

9. An apparatus according to claims 7 or 8, characterised in that filter material (135) is disposed in the uppermost well pipe section (111/1) directly above the liquid-permeable connecting annular wall (131).

10. An apparatus according to any one of claims 7 to 9, characterised in that the well pipe section (111/1) having a larger diameter is subdivided by a concentric interior wall (132) into an outer and an inner region (133, 134) and that the interior wall is impermeable to liquid in its part adjacent to the connecting annular wall (130) and is of liquid-permeable construction in a part (132.1) remote from the connecting annular wall (130).

11. An apparatus according to claim 10, characterised in that a filter bed (136) consisting of filter particles floating in liquid is constructed in the outer region (133) of the well pipe section (111/1) of larger diameter.

12. An apparatus according to any one of claims 7 to 11, characterised in that a device (139-141) for treating raised liquid by means of gases is disposed in the inner region (134) of the well pipe section (111/1) of larger diameter.

13. An apparatus according to any one of claims 5 to 12, characterised in that the pipe (15) which has a feed pump (17) and which passes through at least one partition wall (18) is led outwards through the uppermost well pipe region (21) to a purification apparatus (27) situated outside the well pipe (11), from which purification apparatus a return line (28) leads into the uppermost well pipe region (21) and ends there.

14. An apparatus according to any one of claims 5 to 12, characterised in that the pipe (15) which passes through at least one partition wall (18) has a perforated section in at least one of the well pipe regions (21, 22), which perforated section is surrounded by a replaceable filter (20).

## Revendications

1. Procédé pour rincer des polluants du sol (A) se trouvant au-dessus du niveau de l'eau souterraine (12, 112), caractérisé par les étapes de procédé suivantes :
a) introduction d'un puits (10) au moins jusqu'à ce qu'il soit étanche au-dessus d'une zone saturée en eau souterraine (B) et revêtement avec un tube de puits (11) avec une paroi perméable aux liquides au moins par zones ;
b) création de deux zones de tube de puits (21, 22) perméables aux liquides séparées l'une de l'autre par une section de tube de puits (18) rendue étanche et pontage de la section de tube de puits rendue étanche au moyen d'un canal (tube 15), dans lequel est disposée une pompe d'extraction de liquide (17) ;
c) remplissage au moins de la zone de puits inférieure (22) présentant une paroi perméable aux liquides avec un liquide de rinçage et extraction vers le haut du liquide de rinçage au moyen de la pompe d'extraction (17) dans la zone de tube de puits supérieure (21), présentant une paroi perméable aux liquides pour former une circulation de liquide de rinçage à travers le tube de puits (11) du bas vers le haut et retour à travers le sol environnant (A) et les zones de paroi perméables, un dispositif de nettoyage (20) étant disposé dans le passage de la circulation à un point adapté.

2. Procédé selon la revendication 1, caractérisé en ce que le puits (10) est foncé jusque dans la zone de sol saturée en eau souterraine (B) au-dessous du niveau de l'eau souterraine (12) ; en ce que le tube (15) avec la pompe d'extraction (17) et les pièces (18, 19) rendant étanches les zones de paroi sont formés comme un insert de tube de puits réglable en hauteur ; en ce que de l'eau souterraine est extraite vers le haut comme liquide de rinçage dans le puits (10) pour former une montagne d'eau dynamique (23) au-dessus du niveau de l'eau souterraine (12) dans le sol ; en ce qu'après formation de la montagne d'eau (23) l'insert de tube de puits est placé plus haut pour formation de la circulation de rinçage dans la zone saturée en eau souterraine (A) et/ou dans la zone capillaire (C) ; et en ce que du liquide de rinçage dosé de l'extérieur est ajouté comme remplacement de pertes dans la circulation.

3. Procédé selon la revendication 1 ou 2, caractérisé en ce que la zone de puits supérieure et exempte de liquide est mise en dépression.

4. Procédé selon l'une des revendications 1 à 3, caractérisé en ce que lors du fonctionnement de la circulation au-dessus du niveau de l'eau souterraine (12) des substances détergentes sont versées en plus dans le liquide de rinçage.

5. Dispositif pour la mise en oeuvre du procédé selon l'une des revendications 1 à 4, avec un tube de puits (11) comprenant au moins par zones une paroi perméable aux liquides et un insert de tube de puits avec au moins une pièce de paroi de séparation (18) partageant l'espace de tube de puits en zones distinctes (21, 22) présentant des zones de paroi perméables aux liquides, laquelle est traversée par un tube (15) présentant une pompe d'extraction (17), caractérisé en ce que l'insert de tube de puits est réalisé réglable en hauteur et comprend à son extrémité inférieure une pièce d'étanchéité (19) qui empêche un écoulement de liquide de rinçage dans le tube de puits vers le bas.

6. Dispositif selon la revendication 5, caractérisé en ce que le tube (15) forme la partie porteuse de l'insert de tube de puits, sur laquelle la pièce de paroi de séparation (18) et la pièce d'étanchéité (19) sont fixées, et en ce que le tube (15) est conduit vers l'extérieur à travers une ouverture dans un couvercle de tube de puits (14) et est monté coulissant axialement et fixable sur le couvercle de tube de puits (14).

7. Dispositif pour la mise en oeuvre du procédé selon l'une des revendications 1 à 4, avec un tube de puits comprenant au moins par zones une paroi perméable aux liquides et un insert de tube de puits avec au moins une paroi de séparation (118, 118/1) partageant l'espace de tube de puits en zones distinctes (121, 122, 129) présentant des zones de paroi perméables aux liquides, laquelle est traversée par un tube (115) présentant une pompe d'extraction (117), caractérisé en ce que la section de tube de puits la plus haute (111/1) présente un diamètre plus grand que le reste du tube de puits (111) et en ce qu'une paroi annulaire de liaison (130) prévue à l'endroit de transition de diamètre est formée au moins dans la plus grande partie comme paroi perforée (131) perméable aux liquides.

8. Dispositif selon la revendication 7, caractérisé en ce que la paroi annulaire de liaison (130/131) est placée à un niveau perpendiculaire à l'axe du tube de puits (111).

9. Dispositif selon la revendication 7 ou 8, caractérisé en ce qu'un matériau filtrant (135) est disposé dans la section de tube de puits la plus haute (111/1) directement au-dessus de la paroi annulaire de liaison (131) perméable aux liquides.

10. Dispositif selon l'une des revendications 7 à 9, caractérisé en ce que la section de tube de puits présentant un plus grand diamètre (111/1) est subdivisée par une paroi centrale concentrique (132) en des zones extérieure et intérieure (133, 134) et en ce que la paroi centrale est formée imperméable aux liquides dans sa partie voisine de la paroi annulaire de liaison (130) et perméable aux liquides dans une partie (132.1) éloignée de la paroi annulaire de liaison (130).

11. Dispositif selon la revendication 10, caractérisé en ce qu'une couche filtrante (136) constituée de particules filtrantes flottantes dans le liquide est formée dans la zone extérieure (133) de la section de tube de puits de plus grand diamètre (111/1).

12. Dispositif selon l'une des revendications 7 à 11, caractérisé en ce qu'un dispositif (139 - 141) est disposé dans la zone intérieure (134) de la section de tube de puits de plus grand diamètre (111/1) pour le traitement du liquide extrait vers le haut au moyen de gaz.

13. Dispositif selon l'une des revendications 5 à 12, caractérisé en ce qu'un tube (15) comprenant une pompe d'extraction (17) et traversant au moins une paroi de séparation (18) est conduit à travers la zone de tube de puits la plus haute (21) vers l'extérieur à un dispositif de nettoyage (27) se trouvant à l'extérieur du tube de puits (11), duquel une conduite de retour (28) conduit dans la zone de tube de puits la plus haute (21) et se termine là.

14. Dispositif selon l'une des revendications 5 à 12, caractérisé en ce que le tube (15) traversant au moins une paroi de séparation (18) présente au moins dans l'une des zones de tube de puits (21, 22) une section perforée qui est entourée par un filtre remplaçable (20).
